# EUROPÄISCHE PATENTSCHRIFT

(11) **EP 1 648 963 B1**
(45) Veröffentlichungstag und Bekanntmachung des Hinweises auf die Patenterteilung: **07.01.2009**
(21) Anmeldenummer: 04763529.7
(22) Anmeldetag: 21.07.2004
(51) Int. Cl.: C08L 61/28, C08G 12/32

(54) **KUNSTSTOFFERZEUGNISSE HOHER FESTIGKEIT UND FLEXIBILITÄT**
PLASTIC PRODUCTS WITH HIGH STRENGTH AND FLEXIBILITY
PRODUITS PLASTIQUES PRESENTANT UNE SOLIDITE ET UNE FLEXIBILITE ELEVEES

(30) Priorität: 22.07.2003 DE 10333892
(43) Veröffentlichungstag der Anmeldung: 26.04.2006
(73) Patentinhaber: AMI Agrolinz Melamine International GmbH, 4021 Linz (AT)
(72) Erfinder: RÄTZSCH, Manfred, A-4073 Wilhering (AT); HAIDER, Andreas, A-4020 Linz (AT); MÜLLER, Uwe, A-4222 Luftenberg (AT); GÖSWEINER, Andreas, A-4582 Spittal/Phym (AT)
(74) Vertreter: Gross, Felix
(86) Internationale Anmeldenummer: PCT/EP2004/008395
(87) Internationale Veröffentlichungsnummer: WO 2005/010097

(56) Entgegenhaltungen:
- EP-A- 1 247 837
- WO-A-01/44364

## Beschreibung

Die Erfindung betrifft Kunststofferzeugnisse aus Thermoplasten und Duroplasten mit hoher Festigkeit und Flexibilität sowie ein Verfahren zu deren Herstellung.

Kunststofferzeugnisse, die Thermoplaste und Duroplaste enthalten, sind bekannt.

US 4 267 285 A und Trostyanskaya (Chemical Abstracts 68:40623) beschreiben Glasfaser-verstärkte Thermoplaste wie Polypropylen, die als Füllstoffe Mikropartikel aus vernetzten Phenolharzen oder vernetzten Melaminharzen enthalten. Von Nachteil ist die begrenzte Kompatibilität der vernetzten Duroplastpartikel mit der Thermoplastmatrix.

Weiterhin bekannt ist der Zusatz von Thermoplasten wie Polyacrylamid (DE 23 64 091 A1), Polyvinylalkohol (EP 0 034 446 A1) und Polyvinylpyrrolidon (JP 49 087 819 A2) in Anteilen bis 10 Massen-% bei der Herstellung von Melaminharzfasern nach dem Nassspinnverfahren. Dieser Zusatz von löslichen Thermoplasten als faserbildende Komponente ermöglicht die Fadenbildung, ist jedoch von Nachteil in Bezug auf die Festigkeit der Melaminharzfaser.

Ziel der Erfindung sind Kunststofferzeugnisse aus Thermoplasten und Duroplasten, die nach thermoplastischen Verarbeitungsverfahren hergestellt werden können und die verbesserte Werkstoffeigenschaften besitzen.

Die Aufgabe der Erfindung wurde durch Kunststofferzeugnisse hoher Festigkeit und Flexibilität gemäß Anspruch 1 gelöst, wobei die Kunststofferzeugnisse erfindungsgemäß vernetzte Halbzeuge oder Formstoffe auf Basis interpenetrierender Netzwerke sind, die 10 bis 50 Massen-% an mindestens einem vernetzten Thermoplast und 90 bis 50 Massen-% an mindestens einem vernetzten Melaminharzether enthält.

Mit Vorteil sind die vernetzten Thermoplaste vom Typ
- Ethylen-Vinylacetat-Copolymere und/oder teilverseifte Ethylen-Vinylacetat-Copolymere mit einem Vinylacetatgehalt von 5 bis 50 Massen-%
   und/oder
- Ethylen-Acrylsäureester-Copolymere und/oder Ethylen-Methacrylsäureester-Copolymere mit einem Ethylengehalt von 60 bis 95 Mol%
   und/oder
- Hydroxyendgruppen-terminierte aliphatische Polyester und/oder Polycaprolactone
   und/oder
- Poly(meth)acrylate mit einem Gehalt an gebundenem Hydroxy-C₁-C₆-alkyl(meth)acrylat von 2 bis 10 Mol%,
   und/oder
- mit 5 bis 20 Massen-% Vinylacetat, Acrylsäure-C₁-C₈-alkylestern und/oder Methacrylsäure-C₁-C₈-alkylestern gepfropfte Polyethylene, Ethylen-C₃-C₈-Olefin-Copolymere mit einem Ethylengehalt von 80 bis 95 Mol%, Styren-Butadien-Styren-Blockcopolymere und/oder Styren-Ethylen-Butadien-Styren-Blockcopolymere,
   und/oder
- thermoplastische Polyurethane.

Vorteilhafterweise werden die vernetzten Halbzeuge oder Formstoffe durch Ausformung und Vernetzung strukturviskoser Schmelzen von Mischungen aus Melaminharzethern mit Molmassengewichtsmitteln von 1500 bis 200000, die 0,1 bis 2 Massen-%, bezogen auf die Melaminharzether, Härter enthalten und Thermoplasten, die 0,1 bis 2 Massen-%, bezogen auf die Thermoplaste, thermisch zerfallende Radikalbildner enthalten, hergestellt.

Mit Vorteil enthalten die Kunststofferzeugnisse 10 bis 70 Massen-% Füllstoffe, Adsorbermaterialien, anorganische Fasern und/oder Kunststofffasern, 1 bis 15 Massen-% Hydrophobierungsmittel und/oder 1 bis 10 Massen-% Flammschutzmittel, 0,1 bis 2 Massen-% Pigmente und/oder 0,1 bis 2 Massen-% Stabilisatoren und/oder 0,1 bis 5 Massen-%, jeweils bezogen auf die Kunststofferzeugnisse, Hilfsstoffe.

Bevorzugt sind die Kunststofferzeugnisse Spritzgussteile, Rohre, Platten oder Profile.

Geeignete teilverseifte Ethylen-Vinylacetat-Copolymere in den Kunststofferzeugnissen sind vernetzte Copolymere, die einen Ausgangs-Vinylacetatgehalt von 4 bis 50 Massen-% besitzen, und bei denen 5 bis 50 Mol% der Vinylacetatgruppen zu Vinylalkoholgruppen verseift sind.

Beispiele für geeignete Hydroxyendgruppen-terminierte Polyester, die in den Kunststofferzeugnissen enthalten sein können, sind Polyester auf Basis gesättigter Dicarbonsäuren wie Adipinsäure und/oder Bernsteinsäure, ungesättigter Dicarbonsäuren wie Maleinsäure, Fumarsäure und/oder Itakonsäure und Diolen wie Ethylenglycol, Butandiol, Neopentylglycol und/oder Hexandiol.

Beispiele für Polyurethane, die in den Kunststofferzeugnissen enthalten sein können, sind vernetzte thermoplastische Polyurethane auf Basis von Hexamethylendiisocyanat als Diisocyanatkomponente und Diolkomponenten wie Butandiol, Hexandiol, Dodecandiol und/oder Polyalkylenglycolen.

Die in den Kunststofferzeugnissen enthaltenen Füllstoffe und Adsorbermaterialien sind bevorzugt Al₂O₃. Al(OH)₃, SiO₂, Bariumsulfat, Calciumcarbonat, Glaskugeln, Kieselerde, Glimmer, Quarzmehl, Schiefermehl, Mikrohohlkugeln, Ruß, Talkum, Schichtsilikate, Molekularsiebe, Gesteinsmehl, Kreide, Talkum, Cellulose und/oder Cyclodextrine. Besonders bevorzugt als Füllstoffe sind Schichtsilikate vom Typ Montmorillonit, Bentonit, Kaolinit, Muskovit, Hectorit, Fluorhectorit, Kanemit, Revdit, Grumantit, Ilerit, Saponit, Beidelit, Nontronit, Stevensit, Laponit, Taneolit, Vermiculit, Halloysit, Volkonskoit, Magadit, Rectorit, Kenyait, Sauconit, Borfluorphlogopite und/oder synthetische Smectite. Als Adsorbermaterialien werden Schichtsilikate vom Typ Montmorillonit, Bentonit, Hectorit, Molekularsiebe des Typen A, X, Y, insbesondere 5A, Adsorber auf Siliciumdioxidbasis und/oder Mikrohohlkugeln besonders bevorzugt.

Die in den Kunststofferzeugnissen enthaltenen anorganischen Fasern sind bevorzugt Glasfasern, Gesteinsfasern oder Kohlenstofffasern.

Die in den Kunststofferzeugnissen enthaltenen Kunststofffasern sind bevorzugt Polyesterfasern oder Polyamidfasern.

Die in den Kunststofferzeugnissen vorteilhafterweise enthaltenen Hydrophobierungsmittel sind bevorzugt organische Siliziumverbindungen vom Typ Organosilanole, Organo-siloxane, Organosilane, Organoaminosilane, Aminoendgruppen- oder Hydroxy-endgruppen-terminierte Polyorganosiloxane; Oberflächen-fluorierte SiO₂-Nano-partikel, Polytetrafluorethylen-Nanopartikel und/oder Imidgruppen enthaltende Copolymere von ethylenisch ungesättigten C₄-C₂₀-Dicarbonsäureanhydriden.

Beispiele für geeignete Flammschutzmittel, die in den erfindungsgemäßen Kunststofferzeugnissen enthalten sein können, sind Ammoniumpolyphosphat, Natriumphosphat, Melamincyanurat, Bortrioxid, Borsäure, Ammoniumborat und Zinkborat.

Beispiele für geeignete Pigmente, die in den erfindungsgemäßen Kunststofferzeugnissen enthalten sein können, sind Eisenoxid, Estergruppen enthaltende Isoindolinpigmente, Anthracenfluoreszenzfarbstoffe, Carbazoldioxazin und Delta-Indanthron-Blaupigment.

Beispiele für geeignete Stabilisatoren, die in den erfindungsgemäßen Kunststofferzeugnissen enthalten sein können, sind UV-Stabilisatoren wie 2-(2-Hydroxy-3-tert.butyl-5-methylphenyl)benztriazol, 2,4-Dihydroxybenzophenon, Sebacinsäure-bis[2,2,6,6-tetramethyl-1-(octyloxy)-4-piperidinyl]ester oder Bis-(2,2,6,6-tetramethyl-4-piperidinyl)sebacat und/oder Antioxidantien wie Octadecyl-3-(3', 5'-di-tertbutyl-4'-hydroxyphenyl)propionat.

Die in den Kunststofferzeugnissen enthaltenen Hilfsstoffe sind bevorzugt Polymere vom Typ nichtveretherte und/oder teilveretherte Melaminharze mit einem Molverhältnis Melamin/ Formaldehyd 1 : 1,5 bis 1 : 4, Gleitmittel vom Typ Zinkstearat und/oder Magnesiumstearat und/oder Antihaftmittel vom Typ Talkum, Aluminiumoxid, Natriumcarbonat, Calciumcarbonat, Kieselsäure oder Polytetrafluorethylenpulver.

Die Aufgabe wird auch durch ein Verfahren mit den Merkmalen des Anspruchs 9 gelöst. Dabei wird das Kunststofferzeugnis durch Ausformung und Vernetzung strukturviskoser Schmelzen von Mischungen von Melaminharzethern und Thermoplasten hergestellt.

Die Kunststofferzeugnisse hoher Festigkeit und Flexibilität werden beispielsweise nach einem Verfahren hergestellt, bei dem erfindungsgemäß Kunststofferzeugnisse in Form von vernetzten Halbzeugen oder Formstoffen auf Basis interpenetrierender Netzwerke, die aus
A) 10 bis 50 Massen-% vernetzten Thermoplasten vom Typ
   - Ethylen-Vinylacetat-Copolymere und/oder teilverseifte Ethylen-Vinylacetat-Copolymere mit einem Vinylacetatgehalt von 5 bis 50 Massen-%
      und/oder
   - Ethylen-Acrylsäureester-Copolymere und/oder Ethylen-Methacrylsäureester-Copolymere mit einem Ethylengehalt von 60 bis 95 Mol%
      und/oder
   - Hydroxyendgruppen-terminierte aliphatische Polyester und/oder Polycaprolactone
      und/oder
   - Poly(meth)acrylate mit einem Gehalt an gebundenem Hydroxy-C₁-C₆-alkyl(meth)acrylat von 2 bis 10 Mol%
      und/oder
   - mit 5 bis 20 Massen-% Vinylacetat, Acrylsäure-C₁-C₈-alkylestern und/oder Methacrylsäure-C₁-C₈-alkylestern gepfropfte Polyethylene, Ethylen-C₃-C₈-Olefin-Copolymere mit einem Ethylengehalt von 80 bis 95 Mol%, Styren-Butadien-Styren-Blockcopolymere und/oder Styren-Ethylen-Butadien-Styren-Blockcopolymere
      und/oder
   - thermoplastische Polyurethane
      und
B) 90 bis 50 Massen-% vernetzten Melaminharzethern bestehen,
wobei die Kunststofferzeugnisse 10 bis 70 Massen-% Füllstoffe, Adsorbermaterialien, anorganische Fasern und/oder Kunststofffasern, 1 bis 10 Massen-% Flammschutzmittel, 0,1 bis 2 Massen-% Pigmente, 0,1 bis 2 Massen-% Stabilisatoren und/oder 0,1 bis 5 Massen-%, jeweils bezogen auf die Kunststofferzeugnisse, Hilfsstoffe enthalten können,
nach einem Extruderverfahren hergestellt, bei dem

in der ersten Verfahrensstufe in Extrudern einer Länge von 30 bis 60 D, die mit Seitenstromdosiereinrichtungen für feste und flüssige Medien und Vakuumentgasung ausgerüstet sind
- in einem ersten Extrudersegment Schmelzemischungen aus Melaminharzethern mit Molmassengewichtsmitteln von 1500 bis 200000 und einem Molverhältnis Melam in/Formaldehyd von 1 : 1,5 bis 1 : 4 und Thermoplasten bei Massetemperaturen von 100 bis 170°C hergestellt werden, wobei die Mischungskomponenten gemeinsam in den Einzugstrichter dosiert werden können oder der Melaminharzether nach Aufschmelzen des Thermoplasts über eine Seitenstromdosiereinrichtung in die Thermoplastschmelze dosiert werden kann oder der Thermoplast nach Aufschmelzen des Melaminharzethers über eine Seitenstromdosiereinrichtung in die Thermoplastschmelze dosiert werden kann, nachfolgend die Schmelzemischung nach Homogenisierung entgast wird und
- im zweiten Extrudersegment bei Massetemperaturen von 100 bis 150°C in die Schmelzemischung 0,1 bis 2 Massen-%, bezogen auf die Melaminharzether, Härter, 0,1 bis 2 Massen-%, bezogen auf die Thermoplaste, thermisch zerfallende Radikalbildner, dosiert und in der Schmelzemischung homogenisiert werden, wobei Härter und/oder thermisch zerfallende Radikalbildner als 60 bis 90 Massen-% Thermoplast enthaltendes Masterbatch eingesetzt werden können
   und wobei 10 bis 70 Massen-% Füllstoffe, Adsorbermaterialien, anorganische Fasern und/oder Kunststofffasern, 1 bis 10 Massen-% Flammschutzmittel, 0,1 bis 2 Massen-% Pigmente, 0,1 bis 2 Massen-% Stabilisatoren und/oder 0,1 bis 5 Massen-% jeweils bezogen auf die Summe von Melaminharzether und Thermoplast, Hilfsstoffe im ersten und/oder zweiten Extrudersegment in den Extruder dosiert werden können
   und
   in der zweiten Verfahrensstufe die Schmelzemischung
- entweder aus dem Extruder ausgetragen, granuliert, das Formmassengranulat in einer dritten Verfahrensstufe bei Temperaturen von 150 bis 240°C aufgeschmolzen und die strukturviskose Schmelze in Pressen, Extrudern oder Spritzgiessmaschinen unter Vernetzung zu Halbzeugen oder Formstoffen verarbeitet wird
- oder in einem dritten Extrudersegment auf Temperaturen von 150 bis 240°C erhitzt, die strukturviskose Schmelze unter Vernetzung durch ein Formwerkzeug ausgetragen und als Halbzeug abgezogen wird.

Die im Beispiel genannten Prozessparameter können in dieser Form alle zusammen oder auch einzelnen vorliegen. Bevorzugt werden als Extruder beim Extruderverfahren Doppelschneckenextruder oder Extruder mit Plungerschnecke eingesetzt.

Mit Vorteil kann das Kunststofferzeugnis nach einem Sinterverfahren hergestellt werden . Als Beispiel für diese Ausführungsform zur Herstellung von Kunststofferzeugnissen hoher Festigkeit und Flexibilität wird im Folgenden dargestellt, wobei Kunststofferzeugnisse in Form von vernetzten Halbzeugen oder Formstoffen auf Basis interpenetrierender Netzwerke, die aus
A) 10 bis 50 Massen-% vernetzten Thermoplasten vom Typ
   - Ethylen-Vinylacetat-Copolymere und/oder teilverseifte Ethylen-Vinylacetat-Copolymere mit einem Vinylacetatgehalt von 5 bis 50 Massen-%
      und/oder
   - Ethylen-Acrylsäureester-Copolymere und/oder Ethylen-Methacrylsäureester-Copolymere mit einem Ethylengehalt von 60 bis 95 Mol%
      und/oder
   - Hydroxyendgruppen-terminierte aliphatische Polyester und/oder Polycaprolactone
      und/oder
   - Poly(meth)acrylate mit einem Gehalt an gebundenem Hydroxy-C₁-C₆-alkyl(meth)acrylat von 2 bis 10 Mol%
      und/oder
   - mit 5 bis 20 Massen-% Vinylacetat, Acrylsäure-C₁-C₈-alkylestern und/oder Methacrylsäure-C₁-C₈-alkylestern gepfropfte Polyethylene, Ethylen-C₃-C₈-Olefin-Copolymere mit einem Ethylengehalt von 80 bis 95 Mol%, Styren-Butadien-Styren-Blockcopolymere und/oder Styren-Ethylen-Butadien-Styren-Blockcopolymere
      und/oder
   - thermoplastische Polyurethane
      und
B) 90 bis 50 Massen-% vernetzten Melaminharzethern bestehen, wobei die Kunststofferzeugnisse 10 bis 70 Massen-% Füllstoffe, Adsorbermaterialien, anorganische Fasern und/oder Kunststofffasern, 1 bis 10 Massen-% Flammschutzmittel, 0,1 bis 2 Massen-% Pigmente, 0,1 bis 2 Massen-% Stabilisatoren und/oder 0,1 bis 5 Massen-%, jeweils bezogen auf die Kunststofferzeugnisse, Hilfsstoffe enthalten können, nach einem Sinterverfahren hergestellt werden, bei dem
   - in der ersten Verfahrensstufe Mischungen aus Melaminharzethern mit Molmassengewichtsmitteln von 1500 bis 200000 und einem Molverhältnis Melamin/Formaldehyd von 1 : 1,5 bis 1 : 4, Thermoplasten und gegebenenfalls Füllstoffen, Adsorbermaterialien, anorganische Fasern und/oder Kunststofffasern in Schnellmischern bei Verweilzeiten von 3 bis 30 min und Endtemperaturen von 90 bis 160°C gesintert werden, die Sintermischung auf Temperaturen von 50 bis 120°C abgekühlt wird, und nach Abkühlung auf die Sintermischung 0,1 bis 3 Massen-%, bezogen auf die Melaminharzether, Härter, 0,1 bis 2 Massen-%, bezogen auf die Thermoplaste, thermisch zerfallende Radikalbildner, und gegebenenfalls 1 bis 10 Massen-%, jeweils bezogen auf die Summe von Melaminharzether und Thermoplast, Flammschutzmittel, 0,1 bis 2 Massen-% Pigmente, 0,1 bis 2 Massen-% Stabilisatoren und/oder 0,1 bis 5 Massen-% Hilfsstoffe aufgetrommelt werden
      und
   - in der zweiten Verfahrensstufe die Sintermischung bei Temperaturen von 150 bis 240°C aufgeschmolzen und die strukturviskose Schmelze in Pressen, Extrudern oder Spritzgiessmaschinen unter Vernetzung zu Halbzeugen oder Formstoffen verarbeitet wird.

Auch bei diesem Beispiel können die Prozessparameter alle zusammen oder einzeln vorkommen.

Bei dem Sinterverfahren erfolgt der Wärmeeintrag im Innenmischer sowohl durch die Friktionserwärmung als auch durch die Mantelheizung.

Die bei den erfindungsgemäßen Verfahren zur Herstellung von Kunststofferzeugnissen eingesetzten Melaminharzether sind bevorzugt veretherte Melaminharzkondensate, die frei von an die Triazinringe des Melaminharzkondensats gebundenen Hydroxymethylenaminogruppen und Triazinringe verknüpfenden -NH-CH₂-O-CH₂-NH- Gruppen sind, und bei denen die Veretherung der Hydroxymethylaminogruppen durch C₁-C₁₈-Alkohole und/oder Diole mit Molmassen von 62 bis 20000 erfolgt ist. Bevorzugt werden die für die Herstellung der Kunststofferzeugnisse eingesetzten Melaminharzether durch Veretherung von Melaminharzvorkondensaten mit C₁-C₄-Alkoholen, gegebenenfalls unter nachfolgender partieller Umetherung mit C₄-C₁₈-Alkoholen, C₂-C₁₈-Diolen, mehrwertigen Alkoholen vom Typ Glycerin oder Pentaerythrit, C₅-C₁₈-Aminoalkoholen, Polyalkylenglycolen, Hydroxyendgruppen enthaltenden Polyestern, Siloxanpolyestern, Siloxanpolyethern, Melamin-Alkylenoxid-Addukten und/oder Zweikernphenol-Alkylenoxidaddukten und nachfolgende thermische Kondensation der Melaminharzether in der Schmelze im kontinuierlichen Kneter bei Temperaturen von 140 bis 220°C hergestellt.

Es ist vorteilhaft, bei der Herstellung der Kunststofferzeugnisse Copolymere aus Ethylen und ungesättigten Estern und/oder teilverseifte Ethylen-Vinylacetat-Copolymere einzusetzen.

Als Ethylen-Vinylacetat-Copolyere bei der Herstellung der Kunststofferzeugnisse sind Copolymere geeignet, die einen Vinylacetatgehalt von 4 bis 50 Massen-% und Schmelzindices im Bereich von 0,5 bis 400 g/10 min bei 190°C/2,16 kp besitzen.

Geeignete teilverseifte Ethylen-Vinylacetat-Copolymere bei der Herstellung der Kunststofferzeugnisse sind Copolymere, die einen Ausgangs-Vinylacetatgehalt von 4 bis 50 Massen-% und Schmelzindices im Bereich von 0,5 bis 400 g/10 min bei 190°C/2,16 kp besitzen, und bei denen 5 bis 50 Mol% der Vinylacetatgruppen zu Vinylalkoholgruppen verseift sind.

Für eine bessere Dosierbarkeit können Ethylen-Copolymere mit hohem Vinylacetatgehalt als talkumgepuderte Granulate eingesetzt werden.

Die gepfropften Ethylen-Vinylacetat-Copolymere, die bei den Verfahrensvarianten zur Herstellung von Kunststofferzeugnissen eingesetzt werden können, sind bevorzugt Produkte mit Schmelzindices von 10 bis 80 g/10 min bei 190°C/2,16 kp. Die Pfropfcopolymere können durch Modifizierung der Copolymeren mit den entsprechenden Monomeren in der Schmelze oder durch Modifizierung in fester Phase, bei denen die Copolymere feinteilig in Pulverform vorliegen, hergestellt werden.

Beispiele für geeignete Polycaprolactone, die bei den Verfahrensvarianten zur Herstellung von Kunststofferzeugnissen eingesetzt werden können, sind Polycaprolactone mit Dichten von 1,05 bis 1,15 g/cm³ bei 60°C, Viskositäten im Bereich von 500 bis 5000 Pas bei 100°C und Schmelzindices im Bereich von 2 bis 80 g/10 min bei 160°C/2,16 kp. Die Polycaprolactone können ebenfalls Ethylenoxidaddukte an Polycaprolacton sein.

Bei den erfindungsgemäßen Verfahren zur Herstellung von Kunststofferzeugnissen werden als Härter für die Melaminharzether bevorzugt Säurebildner vom Typ blockierte Sulfonsäuren, aliphatische C₄-C₁₈-Carbonsäuren, aromatische C₇-C₁₈-Carbonsäuren, Alkalisalze oder Ammoniumsalze der Phosphorsäure, C₁-C₁₂-Alkylester oder C₂-C₈-Hydroxyalkylester von C₇-C₁₄-aromatischen Carbonsäuren oder anorganischen Säuren, Salze von Melamin oder Guanaminen mit C₁-₁₈-aliphatischen Carbonsäuren, Anhydride, Halbester oder Halbamide von C₄-C₂₀-Dicarbonsäuren, Halbester oder Halbamide von Copolymeren aus ethylenisch ungesättigten C₄-C₂₀-Dicarbonsäureanhydriden und ethylenisch ungesättigten Monomeren vom Typ C₂-C₂₀-Olefine und/oder C₈-C₂₀-Vinylaromaten, und/oder Salze von C₁-C₁₂-Alkylaminen bzw. Alkanolaminen mit C₁-C₁₈-aliphatischen, C₇-C₁₄-aromatischen oder alkylaromatischen Carbonsäuren sowie anorganischen Säuren vom Typ Salzsäure, Schwefelsäure oder Phosphorsäure, eingesetzt.

Beispiele für blockierte Sulfonsäuren als Härter für die Melaminharzether sind Benzilmonoximtosylat, Benzilmonoxim-p-dodecylbenzolsulfonat, 4-Chlor-αtrifluoracetophenonoximbenzolsulfonat, und 2-Pentafluorophenylsulfonyloxy-imino-4-phenyl-but-3-ennitril.

Beispiele für aliphatische C₄-C₁₈-Carbonsäuren als Härter für die Melaminharzether sind Capronsäure, Palmitinsäure, Stearinsäure und Ölsäure.

Beispiele für aromatische C₇-C₁₈-Carbonsäuren als Härter für die Melaminharzether sind Benzoesäure, Phthalsäure oder Naphthalindicarbonsäure.

Beispiele für Alkalisalze oder Ammoniumsalze der Phosphorsäure als Härter für die Melaminharzether sind Ammoniumhydrogenphosphat, Natriumpolyphosphat und Kaliumhydrogenphosphat.

Beispiele für C₁-C₁₂-Alkylester bzw. C₂-C₈-Hydroxyalkylester von C₇-C₁₄-aromatischen Carbonsäuren als Härter für die Melaminharzether sind Dibutylphthalat, Phthalsäurediglycolester und/oder Trimellithsäureglycolester.

Beispiele für Salze von Melamin bzw. Guanaminen mit C₁-₁₈-aliphatischen Carbonsäuren als Härter für die Melaminharzether sind Melaminformiat, Melamincitrat, Melaminmaleat, Melaminfumarat und/oder Acetoguanaminbutyrat.

Beispiele für Anhydride, Halbester oder Halbamide von C₄-C₂₀-Dicarbonsäuren als Härter für die Melaminharzether sind Maleinsäureanhydrid, Bernsteinsäureanhydrid, Phthalsäureanhydrid, Mono-C₁-C₁₈-alkylmaleate, Maleinsäuremonoamid oder Maleinsäuremono-C₁-C₁₈-alkyl-amide.

Beispiele für Mono-C₁-C₁₈-alkyl-maleate als Härter für die Melaminharzether sind Maleinsäuremonobutylester, Maleinsäuremonoethylhexylester oder Monostearylmaleat.

Beispiele für Maleinsäuremono-C₁-C₁₈-alkyl-amide als Härter für die Melaminharzether sind Maleinsäuremonoethylamid, Maleinsäuremonooctylamid oder Maleinsäuremonostearylamid.

Beispiele für Halbester oder Halbamide von Copolymeren aus ethylenisch ungesättigten C₄-C₂₀-Dicarbonsäureanhydriden und ethylenisch ungesättigten Monomeren vom Typ C₂-C₂₀-Olefine und/oder C₈-C₂₀-Vinylaromaten als Härter für die Melaminharzether sind Halbester oder Halbamide von Copolymeren aus Maleinsäureanhydrid und C₃-C₈-α-Olefinen vom Typ Isobuten, Diisobuten und/oder 4-Methylpenten und/oder Styren mit einem Molverhältnis Maleinsäureanhydrid/C₃-C₈-α-Olefin bzw. Styren bzw. entsprechender Monomermischungen von 1 : 1 bis 1 : 5.

Beispiele für Salze von C₁-C₁₂-Alkylaminen bzw. Alkanolaminen mit C₁-C₈-aliphatischen, C₇-C₁₂-aromatischen bzw. alkylaromatischen Carbonsäuren oder anorganischen Säuren vom Typ Salzsäure, Schwefelsäure oder Phosphorsäure als Härter für die Melaminharzether sind Ethanolammmoniumchlorid, Triethylammoniummaleat, Diethanolammoniumphosphat und/oder Isopropylammonium-p-toluolsulfonat.

Bei den erfindungsgemäßen Verfahren zur Herstellung von Kunststofferzeugnissen werden als thermisch zerfallende Radikalbildner zur Vernetzung der Thermoplastkomponente bevorzugt Radikalbildner, deren thermischer Zerfall unterhalb 210°C abgeschlossen ist, vom Typ Acoylperoxide, Alkylperoxide, Hydroperoxide, Peroxycarbonate und/oder Perester, eingesetzt.

Beispiele für geeignete Acoylperoxide, die als thermisch zerfallende Radikalbildner bei der Herstellung von Kunststofferzeugnissen eingesetzt werden können, sind Benzoylperoxid, 4-Chlorbenzoylperoxid, 3-Methoxybenzoylperoxid und Methylbenzoylperoxid.

Beispiele für geeignete Alkylperoxide, die als thermisch zerfallende Radikalbildner bei der Herstellung von Kunststofferzeugnissen eingesetzt werden können, sind Allyl-tert.butylperoxid, 1,1-Bis-(tert.-butylperoxi)-3,3,5-trimethylcyclohexan, Diethylaminomethyl-tert.-butylperoxid, Dicumylperoxid, tert.-Butyl-cumylperoxid, Di-(tert.-butylperoxyisopropyl)benzen, 1,1-Di(tert.-butylperoxy)-3,3,5-trimethylcyclohexan, 3,6,9-Triethyl-3,6,9-trimethyl-1,4,7-triperoxonan und tert.Butylperoxid.

Beispiele für geeignete Perester und Peroxycarbonate, die als thermisch zerfallende Radikalbildner bei der Herstellung von Kunststofferzeugnissen eingesetzt werden können, sind Butylperacetat, Cumylperacetat, Cumylperpropionat, Cyclohexylperacetat, Di-tert.-butylperadipat, tert.-Butylcyclobutan-percarboxylat, tert.-Butyl-2-propylperpenten-2-oat, tert.-Butyl-1-methyl-cypropylpercarboxylat, tert.-Butylperoxyisopropylcarbonat und tert.Butylperpropionat.

Werden als Thermoplaste bei den Herstellungsverfahren für Kunststofferzeugnissen Ethylen-Vinylacetat-Copolymere und/oder teilverseifte Ethylen-Vinylacetat-Copolymere eingesetzt, so lässt sich die erforderliche Vernetzung ebenfalls durch Zusatz von Alkalimetallalkoxylaten wie Natriummethylat, Kaliummethylat oder Natrium-tert.butylat erzielen.

Der besondere Vorteil der erfindungsgemäßen Kunststofferzeugnisse besteht in der hohen Festigkeit und Flexibilität, die aus der interpenetrierenden Netzwerkstruktur der Kunststoffkomponenten resultiert.

Kunststofferzeugnisse mit interpenetrierender Netzwerkstruktur nach thermoplastischen Verarbeitungsverfahren lassen sich ausgehend von Mischungen aus üblichen niederviskosen Melaminharzen und niederviskosen Thermoplasten nicht herstellen, Voraussetzung für eine thermoplastische Verarbeitbarkeit bildet ein strukturviskoses Verhalten der Kunststoffschmelze. In den Mischungen aus Thermoplasten und Melaminharzen wurde ein strukturviskoses Verhalten der Schmelze dadurch erzielt, indem als Melaminharze Melaminharzether mit Molmassengewichtsmitteln von 1500 bis 200000 eingesetzt wurden.

Eine thermoplastische Verarbeitung von Mischungen erfordert ähnliche Schmelzviskositäten der Mischungskomponenten, um eine Entmischung der Komponenten zu verhindern. In der zweiten Verfahrensstufe des erfindungsgemäßen Verfahrens zur Herstellung der Kunststofferzeugnisse erhöht sich die Schmelzviskosität der Melaminharzetherkomponente bei der Ausformung zum Erzeugnis kontinuierlich infolge des Härtungsvorganges. Die Anpassung der Schmelzviskosität der Thermoplastkomponente wird in dieser Verfahrensstufe durch die Molmassenvergrösserung unter der Einwirkung der zugesetzten thermisch zerfallenden Radikalbildner gelöst. Die parallel ablaufende Vernetzung der Thermoplast- und Duroplastkomponente in der zweiten Verfahrensstufe bewirkt eine Ausbildung von interpenetrierenden Netzwerkstrukturen mit günstigen Festigkeits- und Flexibilitätseigenschaften der Kunststofferzeugnisse.

Bevorzugte Einsatzgebiete der erfindungsgemäßen Kunststofferzeugnisse sind Fahrzeugindustrie, Maschinenbau, Elektrotechnik und Elektronik.

Die Erfindung wird durch nachfolgende Beispiele erläutert :

### Beispiel 1

### 1.1 Herstellung des thermoplastisch verarbeitbaren Melaminharzethers

In einem 30 I Rührautoklav wird durch Eintragen von 1,0 kg Melamin in 13,9 kg Methanol bei 95°C eine Melamindispersion hergestellt und nach Einstellung eines pH-Wertes von 5,9 mit 10% HCl in den Rührautoklav 2,5 kg einer 37% Formaldehydlösung, die auf 60°C vortemperiert ist, unter Druck dosiert und das Reaktionsgemisch bei einer Reaktionstemperatur von 95°C und einer Reaktionszeit von 20 min umgesetzt.
Nach Abkühlung auf 65°C wird durch Zugabe von 10% Natronlauge ein pH-Wert von 9 eingestellt und das im Wasser-Methanol-Gemisch gelöste veretherte Melaminharzkondensat wird nach Zugabe von 2,23 kg Butanol in einen ersten Vacuumverdampfer überführt, in dem die Lösung des veretherten Melaminharzkondensats bei 82°C zu einer hochkonzentrierten Melaminharzlösung, die einen Feststoffanteil von 76 Massen-% und einen Gehalt an Butanol von 8 Massen-% besitzt, eingeengt wird.

Nachfolgend wird die hochkonzentrierte Lösung des veretherten Melaminharzes in einen zweiten Vakuumverdampfer überführt und bei 90°C zu einer sirupösen Schmelze eingeengt, die einen Feststoffanteil von 96 Massen-% besitzt.

Die sirupöse Schmelze wird in einer Mischstrecke mit 1,0 kg Polyethylenglycol (Molmasse 800) gemischt, in den Einzugstrichter eines Laborextruders GL 27 D44 mit Vakuumentgasungszonen nach der Einzugszone sowie nach der Reaktionszone vor dem Produktaustrag, Temperaturprofil 200/215/215/240/ 240/215/215/200/105/95°C, Extruderdrehzahl 300 min⁻¹, dosiert, das Reaktionsgemisch bei 850 mbar entgast, und der austretende Strang in einem Granulator geschnitten. Zur Verbesserung der Dosierbarkeit wird das Granulat mit 0,3 Massen-% Talkum gepudert.

Das veretherte Melaminharzkondensat besitzt ein Molmassen-Gewichtsmittel (GPC) von 20000 und einen Anteil an Butoxygruppen von 0,3 Massen-%. An die Triazinringe des Melaminharzkondensats gebundene Hydroxymethylenaminogruppen und Triazinringe verknüpfende -NH-CH₂-O-CH₂-NH- - Gruppen sind im IR-Spektrum nicht nachweisbar.

### 1.2 Herstellung des vernetzten Kunststofferzeugnisses

In einen Werner&Pfleiderer - Extruder ZSK 30, LD= 48 mit Seitenstromdosierung für feste und flüssige Medien, Vakuumentgasung und Plattenwerkzeug 4,0 x 100, wird in den Einzugstrichter mit 4,5 kg/h das veretherte Melaminharzkondensat nach 1.1 und mit 1,5 kg/h ein Ethylen-Vinylacetat-Copolymer (Vinylacetatgehalt 28 Massen-%, Schmelzindex 25 g/10 min bei 190°C/2,16 kp) dosiert und bei 130°C aufgeschmolzen. In die Schmelze des Melaminharzethers werden über eine Seitenstromdosierung mit 5,5 kg/h mit Aminosilan geschlichtete Glasfasern (mittlerer Durchmesser 0,08 mm) vom Roving eingezogen und die Glasfasern enthaltende Schmelze bei einer Massetemperatur von 130°C homogenisiert und mit 850 mbar entgast.

Nach der Entgasung wird in die Glasfasern enthaltende Schmelze mit 0,40 kg/h ein EVA-Masterbatch, das 8 Massen-% 2-(2-Hydroxy-3-tert.butyl-5-methylphenyl)benztriazol, 20 Massen-% Monostearylmaleat, 5 Massen-% tert.Ditert.butylperoxid, und 15 Massen-% Zinkstearat enthält, und mit 0,84 kg/h Ammoniumpolyphosphat dosiert, bei einer Massetemperatur von 180°C homogenisiert, durch ein Plattenwerkzeug 4 x 100 mm ausgetragen, und als vernetzte Bahn abgezogen.

Ausgestanzte Prüfkörper aus der glasfaserverstärkten Kunststoffplatte besitzen einen Biegemodul von 72 x 10⁸ N/m².

### Beispiel 2

### 2.1 Herstellung des thermoplastisch verarbeitbaren Melaminharzethers

In einem 30 I Rührautoklav wird durch Eintragen von 1,0 kg Melamin in 15 kg Methanol bei 95°C eine Melamindispersion hergestellt, und nach Einstellung eines pH-Wertes von 6,1 in den Rührautoklav 3,0 kg einer 37% Formaldehydlösung, die auf 92°C vortemperiert ist, unter Druck dosiert, und das Reaktionsgemisch bei einer Reaktionstemperatur von 95°C und einer Reaktionszeit von 6 min umgesetzt.
Nach Abkühlung auf 65°C wird durch Zugabe von 10% Natronlauge ein pH-Wert von 9,2 eingestellt und das im Wasser-Methanol-Gemisch gelöste veretherte Melaminharzkondensat wird nach Zugabe von 0,6 kg Butanol in einen ersten Vakuumverdampfer überführt, in dem die Lösung des veretherten Melaminharzkondensats bei 80°C zu einer hochkonzentrierten Melaminharzlösung, die einen Feststoffanteil von 78 Massen-% und einen Gehalt an Butanol von 3 Massen-% besitzt, eingeengt wird.

Nachfolgend wird die hochkonzentrierte Lösung des veretherten Melaminharzes in einer Mischstrecke mit 0,8 kg Simulsol BPLE (Oligoethylenglycolether von Bisphenol A, Fa. Seppic, Frankreich) gemischt, in einen zweiten Vakuumverdampfer überführt und bei 90°C zu einer sirupösen Schmelze eingeengt, die einen Feststoffanteil von 98 Massen-% besitzt.

Die sirupöse Schmelze wird in den Einzugstrichter eines Laborextruders GL 27 D44 (Leistritz) mit Vakuumentgasungszonen nach der Einzugszone sowie nach der Reaktionszone vor dem Produktaustrag , Temperaturprofil 200/215/215/240/ 240/215/215/200/105/95°C, Extruderdrehzahl 300 min⁻¹, dosiert, das Reaktionsgemisch bei 850 mbar entgast, und der austretende Strang in einem Granulator geschnitten.
Das veretherte Melaminharzkondensat besitzt ein Molmassen-Gewichtsmittel (GPC) von 10000 und einen Anteil an Butoxygruppen von 3 Massen-%. An die Triazinringe des Melaminharzkondensats gebundene Hydroxymethylenaminogruppen und Triazinringe verknüpfende -NH-CH₂-O-CH₂-NH- - Gruppen sind im IR-Spektrum nicht nachweisbar.
Zur Verbesserung der Dosierbarkeit wird das Granulat des Melaminharzethers mit 0,3 Massen-% Talkum gepudert.

### 2.2 Herstellung des Kunststofferzeugnisses

In den Einzugstrichter eines Werner&Pfleiderer - Doppelschneckenextruders ZSK 30, L/D 48 wird der thermoplastisch verarbeitbare Melaminharzether nach 2.1 mit 4,5 kg/h dosiert und bei einer Massetemperatur von 120°C aufgeschmolzen. In die Schmelze des Melaminharzethers werden über eine Seitenstromdosierung mit 3,2 kg/h eine 1:1 Mischung aus Kreide und Talkum dosiert, in der Schmelze bei 120°C homogen verteilt und die Mischung bei 800 mbar einer Vakuumentgasung unterzogen. Nach der Entgasung wird in die Schmelze bei einer Massetemperatur von 130°C mit 1,5 kg/h eine 1 : 1 Granulatmischung aus einem Ethylen-Vinylacetat-Copolymer (Vinylacetatgehalt 12 Massen-%, Schmelzindex 12 g/10 min bei 190°C/2,16 kp) und einem entsprechenden teilverseiften Ethylen-Vinylacetat-Copolymer (30 Mol% der Vinylacetatgruppen verseift, Schmelzindex 20 g/10 min bei 190°C/2,16 kp) mit 0,8 kg/h Ammoniumpolyphosphat, mit 0,8 kg/h ein EVA-Masterbatch, dass 10 Massen-% Phthalsäureanhydrid, 10 Massen-% Magnesiumstearat, 3 Massen-% Dicumylperoxid und 20 Massen-% Bis(2,2,6,6-tetramethyl-4-piperidinyl)sebacat enthält, dosiert, und die Schmelze ausgetragen und granuliert. Die Formmasse wird in einem Extruder mit U-Profilwerkzeug bei 180°C aufgeschmolzen, durch das U-Profilwerkzeug ausgetragen und als vernetztes Profil abgezogen.

Aus dem Profil ausgestanzte Prüfkörper besitzen einen Biegemodul von 25 x 10⁸ N/m² und eine Bruchdehnung von 3,8%.

### Beispiel 3

### 3.1 Herstellung des Blends aus thermoplastisch verarbeitbarem Melaminharzethers und gepfropftem Ethylenpolymer

In einem 30 I Rührautoklav wird durch Eintragen von 1,0 kg Melamin in 13,9 kg Methanol bei 95°C eine Melamindispersion hergestellt und nach Einstellung eines pH-Wertes von 5,9 mit 10% HCl in den Rührautoklav 2,5 kg einer 37% Formaldehydlösung, die auf 90°C vortemperiert ist, unter Druck dosiert und das Reaktionsgemisch bei einer Reaktionstemperatur von 95°C und einer Reaktionszeit von 20 min umgesetzt.

Nach Abkühlung auf 65°C wird durch Zugabe von 10% Natronlauge ein pH-Wert von 9 eingestellt und das im Wasser-Methanol-Gemisch gelöste veretherte Melaminharzkondensat wird nach Zugabe von 2,23 kg Butanol in einen ersten Vakuumverdampfer überführt, in dem die Lösung des veretherten Melaminharzkondensats bei 82°C zu einer hochkonzentrierten Melaminharzlösung, die einen Feststoffanteil von 76 Massen-% und einen Gehalt an Butanol von 8 Massen-% besitzt, eingeengt wird.

Nachfolgend wird die hochkonzentrierte Lösung des veretherten Melaminharzes in einen zweiten Vakuumverdampfer überführt und bei 90°C zu einer sirupösen Schmelze eingeengt, die einen Feststoffanteil von 96 Massen-% besitzt.

Die sirupöse Schmelze wird in einer Mischstrecke mit 1,6 kg Polyethylenglycol (Molmasse 1000) gemischt. Das Reaktionsgemisch mit 4,5 kg/h in den Einzugstrichter eines Laborextruders GL 27 D44 mit Vakuumentgasungszonen nach der Einzugszone sowie nach der Reaktionszone vor dem Produktaustrag und Seitenstromdosierung, Temperaturprofil 195/195/195/195/250/250/250/250/140/ 100°C, Extruderdrehzahl 250 min⁻¹ dosiert und über die Seitenstromdosierung wird mit 1,5 kg/h ein mit 9 Massen-% Vinylacetat gepfropftes Ethylen-Vinylacetat-Copolymer (24 Massen-% Vinylacetat in der Rückgratkette, Schmelzindex 8 g/10 min bei 190°C/2,16 kp) dosiert und homogenisiert. Das Blend wird bei 850 mbar entgast und der austretende Strang in einem Granulator geschnitten. Zur Verbesserung der Dosierbarkeit wird das Granulat mit 0,3 Massen-% Talkum gepudert.

### 3.2 Herstellung des Kunststofferzeugnisses

In einen Schnellmischer (Innenvolumen 40 I, Mantelheizung 75°C) werden 6,2 kg Cellulosefasern (mittlere Länge 1,8 mm, mittlerer Durchmesser 0,2 mm) eingebracht und bei 900 U/min gewirbelt. Dazu werden 7,0 kg des Granulats nach 3.1 dosiert und die Tourenzahl auf 1800 U/min erhöht bis eine Massetemperatur von 125°C erreicht ist. Die Tourenzahl wird wieder auf 900 U/min abgesenkt und nach Abkühlung auf eine Massetemperatur von 90°C werden auf die gewirbelte Sintermischung 110 g Dihydroxybenzophenon, 750 g Natriumborat, 40 g Phthalsäureanhydrid und 30 g Di-tert.butyl-perbenzoat aufgetrommelt und die Sintermischung ausgetragen.
Die Cellulosefasern enthaltende Sintermischung wird bei 160°C in einem Plattenwerkzeug aufgeschmolzen und bei einem Druck von 45 bar verpresst.
Aus der Platte ausgestanzte Prüfkörper besitzen einen Biegemodul von 38 x 10⁸ N/m² und eine Bruchdehnung von 4,3 %.

### Beispiel 4

In einen Leistritz-Laborextruder GL 27 D 44 mit Seitenstromdosierung für feste und flüssige Medien, Vakuumentgasung und Plattenwerkzeug 4,0 x 100, werden in den Einzugstrichter mit 3,6 kg/h ein Ethylen-Vinylacetat-Copolymer (Vinylacetatgehalt 28 Massen-%, Schmelzindex 25 g/10 min bei 190°C/2,16 kp) und mit 4,1 kg/h das veretherte Melaminharzkondensat nach 1.1 dosiert und bei 130°C aufgeschmolzen. In die Schmelze werden über eine Seitenstromdosierung mit 6,2 kg/h Polyethylenterephthalatfasern (3,3 dtex) vom Roving eingezogen und die Polyethylenterephthalatfasern enthaltende Schmelze bei einer Massetemperatur von 130°C homogenisiert und bei 850 mbar entgast.

Nach der Entgasung werden in die Polyethylenterephthalatfasern enthaltende Schmelze bei einer Massetemperatur von 150°C mit 1,0 kg/h Ammoniumpolyphosphat und mit 0,84 kg/h ein Polyethylenwachs-Masterbatch, das 8 Massen-% Natriummethylat, 10 Massen-% tert.Butylcumylperoxid, 20 Massen-% 2-(2-Hydroxy-3-tert.butyl-5-methyl-phenyl)benztriazol, 8 Massen-% Monostearylmaleat und 10 Massen-% Zinkstearat enthält, dosiert, bei einer Massetemperatur von 175°C homogenisiert, durch ein Plattenwerkzeug 4 x 100 mm ausgetragen und als vernetzte Bahn abgezogen.
Ausgestanzte Prüfkörper aus dem Kunststofferzeugnis besitzen einen Biegemodul von 25 x 10⁸ N/m² und eine Bruchdehnung von 8,2%.

### Beispiel 5

In den Einzugstrichter eines Werner&Pfleiderer - Doppelschneckenextruders ZSK 30, UD 48, wird mit 4,9 kg/h das veretherte Melaminharzkondensat nach 2.1 und mit 2,6 kg/h ein Ethylen-Butylacrylat-Copolymer (Gehalt an Butylacrylat 12 Massen-%, Schmelzindex 35 g/10 min bei 190°C/2,16 kp) dosiert und bei einer Massetemperatur von 145°C aufgeschmolzen. In die Polyolefinschmelze werden über eine Seitenstromdosierung mit 8 kg/h Polyamidfasern (3,2 dtex) vom Roving eingezogen, in der Schmelze bei 145°C homogen verteilt, und die Mischung bei 850 mbar einer Vakuumentgasung unterzogen. Nach der Entgasung wird in die Schmelze bei einer Massetemperatur von 130°C mit 1,0 kg/h Natriumborat, mit 1,0 kg/h ein EVA-Masterbatch, das 25 Massen-% 2-(2-Hydroxy-3-tert.butyl-5-methyl-phenyl)benztriazol, 7 Massen-% Monostearylmaleat, 3 Massen-% Ditert.butylperoxid und 30 Massen-% Zinkstearat enthält, dosiert, und die Polyamidfasern enthaltende Schmelze ausgetragen und granuliert. Die Polyamidfasern enthaltende Formmasse wird in einem Extruder mit Vierkant-Profilwerkzeug bei 170°C aufgeschmolzen, durch das Vierkant-Profilwerkzeug ausgetragen und als vernetztes Profil abgezogen.

Aus dem Profil ausgestanzte Prüfkörper besitzen einen Biegemodul von 26 x 10⁸ N/m² und eine Bruchdehnung von 6,4 %.

### Beispiel 6

### 6.1 Herstellung des Blends aus thermoplastisch verarbeitbarem Melaminharzether und Polycaprolacton

Die sirupöse Schmelze des Melaminharzethers nach 3.1 wird nach Verlassen des zweiten Vakuumverdampfers in einer Mischstrecke mit 0,8 kg Polyethylenglycol (Molmasse 1000) gemischt und das Reaktionsgemisch mit 5,0 kg/h in den Einzugstrichter eines Laborextruders GL 27 D 44 mit Vakuumentgasungszonen nach der Einzugszone sowie nach der Reaktionszone vor dem Produktaustrag und Seitenstromdosierung, Temperaturprofil 200/215/ 215/240/240/215/215/200/105/95°C, Extruderdrehzahl 300 min⁻¹ dosiert. Über die Seitenstromdosierung wird mit 3,0 kg/h Polycaprolacton (Capa 6500, Solvay, Dichte 1,1 g/cm³ bei 60°C, Viscosität 1500 Pas bei 100°C, Schmelzindex 7,2 g/10 min bei 160°C/2,16 kp ) in die Schmelze dosiert und homogenisiert. Das Blend wird bei 850 mbar entgast und der austretende Strang in einem Granulator geschnitten. Zur Verbesserung der Dosierbarkeit wird das Granulat mit 0,3 Massen-% Talkum gepudert.

### 6.2 Herstellung des Kunststofferzeugnisses

In einen Schnellmischer (Innenvolumen 40 I, Mantelheizung 75°C) werden 4 kg Montmorillonit und 2 kg Cellulosefasern (mittlere Länge 1,8 mm, mittlerer Durchmesser 0,2 mm) eingebracht und bei 900 U/min gewirbelt. Dazu werden 5,0 kg des Granulats nach 6.1 dosiert und die Tourenzahl auf 1800 U/min erhöht, bis eine Massetemperatur von 125°C erreicht ist. Die Tourenzahl wird wieder auf 900 U/min abgesenkt und nach Abkühlung auf eine Massetemperatur von 90°C werden auf die gewirbelte Sintermischung 110 g Dihydroxybenzo-phenon, 250 g Natriumborat, 40 g Phthalsäureanhydrid und 15 g Di-tert.butyl-perbenzoat aufgetrommelt und die Sintermischung ausgetragen.

Die Montmorillonit und Cellulosefasern enthaltende Sintermischung wird bei 160°C in einem Plattenwerkzeug aufgeschmolzen und bei einem Druck von 45 bar verpresst.

Aus der Platte ausgestanzte Prüfkörper besitzen einen Biegemodul von 39 x 10⁸ N/m² und eine Bruchdehnung von 6,2 %.

### Beispiel 7

In einen Schnellmischer (Innenvolumen 40 I, Mantelheizung 75°C) werden 4,1 kg Cellulose-Polyethylenterephthalat-1:1-Mischfasern (mittlere Länge 2,2 mm, mittlerer Durchmesser 0,15 mm, ) eingebracht und bei 900 U/min gewirbelt. Dazu werden 4,0 kg des Granulats nach 3.1 und 3 kg eines aliphatischen Polyurethans auf Basis Hexamethylendiisocyanat und Dodecandiol (Schmelzindex 160 g/10 min bei 190°C/2,16 kp) dosiert und die Tourenzahl auf 2500 U/min erhöht, bis eine Massetemperatur von 155°C erreicht ist. Die Tourenzahl wird wieder auf 900 U/min abgesenkt und nach Abkühlung auf eine Massetemperatur von 90°C werden auf die gewirbelte Sintermischung 110 g Dihydroxybenzophenon, 250 g Natriumborat, 40 g Phthalsäureanhydrid und 30 g Di-tert.butyl-perbenzoat aufgetrommelt und die Sintermischung ausgetragen.

Die Sintermischung wird in einer Ferromatic Millacron FM 60 Spritzgiessmaschine (Dreizonenschnecke, L = 22 D) bei einer Massetemperatur von 195°C und einer Werkzeugtemperatur von 50°C zu vernetzten Normprüfstäben verarbeitet. Die Normprüfstäbe besitzen einen Biegemodul von 25,5 x 10⁸ N/m² und eine Dehnung von 7,5%.

## Patentansprüche

1. Kunststofferzeugnis hoher Festigkeit und Flexibilität,
**dadurch gekennzeichnet,**
**dass** das Kunststofferzeugnis ein vernetztes Halbzeug oder ein vernetzter Formstoff auf Basis interpenetrierender Netzwerke ist, das 10 bis 50 Massen-% an mindestens einem vernetzten Thermoplast und 90 bis 50 Masse-% an mindestens einem vernetzten Melaminharzether enthält, und wobei das vernetzte Halbzeug oder der vernetzte Formstoff aus einer Mischung aus Thermoplasten, die 0,1 bis 2 Massen-% eines thermisch zerfallenden Radikalbildners bezogen auf die Gesamtmenge der Thermoplaste enthalten, und aus Melaminharzethem, die 0,1 bis 2 Massen-% eines Härters bezogen auf die Gesamtmenge der Melaminharzether enthalten, hergestellt wurde.

2. Kunststofferzeugnis nach Anspruch 1, **dadurch gekennzeichnet, dass** mindestens ein Thermoplast
ein Ethylen-Vinylacetat-Copolymer,
ein teilverseiftes Ethylen-Vinylacetat-Copolymer mit einem Vinylacetatgehalt von 5 bis 50 Massen-%,
ein Ethylen-Acrylsäureester-Copolymer,
ein Ethylen-Methacrylsäureester-Copolymer mit einem Ethylengehalt von 60 bis 95 Mol%,
ein Hydroxyendgruppen-terminiertes aliphatisches Polyester,
ein Polycaprolacton,
ein Poly(meth)acrylat mit einem Gehalt an gebundenem Hydroxy-C₁-C₈-alkyl(meth)acrylat von 2 bis 10 Mol%,
ein Vinylacetat oder Acrylsäure-C₁-C₈-alkylester mit 5 bis 20 Massen-%, ein Methacrylsäure-C₁-C₈-alkylester gepfropftes Polyethylen,
ein Ethylen-C₃-C₈-Olefin-Copolymer mit einem Ethylengehalt von 80 bis 95 MolE%,
ein Styren-Butadien-Styren-Blockcopolymer,
ein Styren-Ethylen-Butadien-Styren-Blockcopolymer und/oder ein thermoplastisches Polyurethan ist.

3. Kunststofferzeugnis nach Anspruch 1 oder 2, **dadurch gekennzeichnet, dass** mindestens ein Melaminharzether ein Molmassengewichtsmittel von 1500 bis 200000 und einem Molverhältnis Melamin/Formaldehyd von 1 : 1,5 bis 1 : 4 aufweist.

4. Kunststofferzeugnis nach mindestens einem der vorhergehenden Ansprüche, **dadurch gekennzeichnet, dass** es 10 bis 70 Massen-% Füllstoffe, Adsorbermaterialien, anorganische Fasern und/oder Kunststofffasern, 1 bis 15 Massen-% Hydrophobierungsmittel, 1 bis 10 Massen-% Flammschutzmittel, 0,1 bis 2 Massen-% Pigmente, 0,1 bis 2 Massen-% Stabilisatoren und/oder 0,1 bis 5 Massen-%, jeweils bezogen auf die Kunststofferzeugnisse, Hilfsstoffe enthält.

5. Kunststofferzeugnis nach Anspruch 4, **dadurch gekennzeichnet, dass** die Füllstoffe und Adsorbermaterialien Al₂O₃. Al(OH)₃, SiO₂, Bariumsulfat, Calciumcarbonat, Glaskugeln, Kieselerde, Glimmer, Quarzmehl, Schiefermehl, Mikrohohlkugeln, Russ, Talkum, Schichtsilikate, Molekularsiebe, Gesteinsmehl, Kreide, Talkum, Cellulose und/oder Cyclodextrine, bevorzugt als Füllstoffe Schichtsilikate vom Typ Montmorillonit, Bentonit, Kaolinit, Muskovit, Hectorit, Fluorhectorit, Kanemit, Revdit, Grumantit, Ilerit, Saponit, Beidelit, Nontronit, Stevensit, Laponit, Taneolit, Vermiculit, Halloysit, Volkonskoit, Magadit, Rectorit, Kenyait, Sauconit, Borfluorphlogopite und/oder synthetische Smectite, und bevorzugt als Adsorbermaterialien Schichtsilikate vom Typ Montmorillonit, Bentonit, Hectorit, Molekularsiebe des Typen A, X, Y, insbesondere 5A, Adsorber auf Siliciumdioxidbasis und/oder Mikrohohlkugeln, sind.

6. Kunststofferzeugnis nach Anspruch 4 oder 5, **dadurch gekennzeichnet, dass** mindestens ein Hydrophobierungsmittel eine organische Siliziumverbindung vom Typ Organosilanole, Organosiloxane, Organosilane, Organoaminosilane, Aminoendgruppen- oder Hydroxyendgruppen-terminierte Polyorganosiloxane; Oberflächen-fluorierte SiO₂-Nanopartikel, Polytetrafluorethylen-Nanopartikel und/oder Imidgruppen enthaltende Copolymere von ethylenisch ungesättigten C₄-C₂₀-Dicarbonsäureanhydriden ist.

7. Kunststofferzeugnis nach mindestens einem der vorhergehenden Ansprüche, **dadurch gekennzeichnet, dass** das Kunststofferzeugnis als Spritzgussteil, Rohr, Platte oder Profile ausgebildet ist.

8. Verfahren zur Herstellung eines Kunststofferzeugnisses nach Anspruch 1,
**dadurch gekennzeichnet, dass**
das Kunststofferzeugnis durch Ausformung und Vernetzung strukturviskoser Schmelzen von Mischungen von Melaminharzethern und Thermoplasten hergestellt wird.

9. Verfahren nach Anspruch 8, **dadurch gekennzeichnet, dass** das Kunststofferzeugnis mit einem Extruderverfahren hergestellt wird, bei dem in einer ersten Verfahrensstufe in einem ersten Extrudersegment Schmelzemischungen aus Melaminharzethern und Thermoplasten hergestellt werden,
nachfolgend die Schmelzemischung nach Homogenisierung entgast wird, anschließen im zweiten Extrudersegment Härter und thermisch zerfallende Radikalbildner dosiert und in der Schmelzemischung homogenisiert werden und in einer zweiten Verfahrensstufe die Schmelzemischung entweder aus dem Extruder ausgetragen, granuliert,
das Formmassengranulat in einer dritten Verfahrensstufe aufgeschmolzen und die strukturviscose Schmelze in Pressen, Extrudern oder Spritzgiessmaschinen unter Vernetzung zu Halbzeugen oder Formstoffen verarbeitet wird oder in einem dritten Extrudersegment erhitzt und die strukturviscose Schmelze unter Vernetzung durch ein Formwerkzeug ausgetragen und als Halbzeug abgezogen wird.

10. Verfahren nach Anspruch 9, **dadurch gekennzeichnet, dass** das Extruderverfahren mindestens einen Extruder einer Länge von 30 bis 60 D aufweist, der mit Seitenstromdosiereinrichtungen für feste und flüssige Medien und Vakuumentgasung ausgerüstet ist.

11. Verfahren nach Anspruch 9 oder 10, **dadurch gekennzeichnet, dass** die Schmelzemischungen aus Melaminharzethern und Thermoplasten bei bei Massetemperaturen von 100 bis 170°C hergestellt werden.

12. Verfahren nach mindestens einem der Ansprüche 9 bis 11, **dadurch gekennzeichnet, dass** die Mischungskomponenten gemeinsam in den Einzugstrichter dosiert werden oder mindesten ein Melaminharzether nach Aufschmelzen des Thermoplasts über eine Seitenstromdosiereinrichtung in die Thermoplastschmelze dosiert wird oder mindestens ein Thermoplast nach Aufschmelzen des Melaminharzethers über eine Seitenstromdosiereinrichtung in die Thermoplastschmelze dosiert wird.

13. Verfahren nach mindestens einem der Ansprüche 9 bis 12, **dadurch gekennzeichnet, dass** im zweiten Extrudersegement Massetemperaturen von 100 bis 150°C in die Schmelzemischung eingestellt sind.

14. Verfahren nach mindestens einem der Ansprüche 9 bis 13, **dadurch gekennzeichnet, dass** im zweiten Extrudersegment Härter und/oder thermisch zerfallende Radikalbildner als 60 bis 90 Massen-% Thermoplast enthaltendes Masterbatch eingesetzt werden.

15. Verfahren nach mindestens einem der Ansprüche 9 bis 14, **dadurch gekennzeichnet, dass** Füllstoffe, Adsorbermaterialien, anorganische Fasern, Kunststofffasern, Flammschutzmittel, Pigmente, Stabilisatoren und/oder Hilfsstoffe im ersten und/oder zweiten Extrudersegment in den Extruder dosiert werden.

16. Verfahren nach mindestens einem der Ansprüche 9 bis 15, **dadurch gekennzeichnet, dass** im dritten Extrudersegment Temperaturen von 150 bis 240°C eingestellt ist.

17. Verfahren nach Anspruch 8, **dadurch gekennzeichnet, dass** das Kunststofferzeugnis nach einem Sinterverfahren hergestellt wird.

18. Verfahren nach Anspruch 17, **dadurch gekennzeichnet, dass** in einer ersten Verfahrensstufe Mischungen aus mindestens einem Melaminharzether und mindestens einem Thermoplast in Schnellmischern gesintert werden, die Sintermischung abgekühlt wird und nach Abkühlung auf die Sintermischung Härter und / oder thermisch zerfallende Radikalbildner aufgetrommelt werden und in einer zweiten Verfahrensstufe die Sintermischung aufgeschmolzen und die strukturviscose Schmelze in Pressen, Extrudern oder Spritzgiessmaschinen unter Vernetzung zu Halbzeugen oder Formstoffen verarbeitet wird.

19. Verfahren nach Anspruch 17 oder 18, **dadurch gekennzeichnet, dass** Füllstoffe, Adsorbermaterialien, anorganische Fasern und/oder Kunststofffasern in der ersten Verfahrensstufe mitgesintert werden.

20. Verfahren nach mindestens einem der Ansprüche 17 bis 19, **dadurch gekennzeichnet, dass** die Verweilzeit im Schnellmischer zwischen 3 und 30 min und Endtemperatur zwischen 90 bis 160°C beträgt.

21. Verfahren nach mindestens einem der Ansprüche 17 bis 20, **dadurch gekennzeichnet, dass** die Abkühlung der Sintermischung auf Temperaturen von 50 bis 120°C erfolgt.

22. Verfahren nach mindestens einem der Ansprüche 17 bis 21, **dadurch gekennzeichnet, dass** die Sintermischung in der zweiten Verfahrensstufe bei Temperaturen von 150 bis 240°C aufgeschmolzen wird.

23. Verfahren nach mindestens einem der Ansprüche 17 bis 22, **dadurch gekennzeichnet, dass** in der ersten Verfahrensstufe Flammschutzmittel, Pigmente, Stabilisatoren und/oder Hilfsstoffe aufgetrommelt werden.

24. Verfahren nach mindestens einem der Ansprüche 8 bis 23, **dadurch gekennzeichnet, dass** mindestens ein Melaminharzether ein verethertes Melaminharzkondensat ist, das frei von an die Triazinringe des Melaminharzkondensats gebnndenen Hydroxymethylenaminogruppen und Triazinringe verknüpfenden -NH-CH₂-O-CH₂-NH-- Gruppen ist und bei dem die Veretherung der Hydroxymethylaminogruppen durch C₁-C₁₈-Alkohole und/oder Diole mit Molmassen von 62 bis 20000 erfolgt ist.

25. Verfahren nach mindestens einem der Ansprüche 8 bis 24, **dadurch gekennzeichnet, dass** als Härter für mindestens einen Melaminharzether Säurebildner vom Typ blockierte Sulfonsäuren, aliphatische C₄-C₁₈-Carbon-säuren; aromatische C₇-C₁₈-Carbonsäuren; Alkalisalze oder Ammoniumsalze der Phosphorsäure; C₁-C₁₂-Alkylester oder C₂-C₈-Hydroxyalkylester von C₇-C₁₄-aromatischen Carbonsäuren oder anorganischen Säuren; Salze von Melamin oder Guanaminen mit C₁-₁₈-aliphatischen Carbonsäuren; Anhydride, Halbester oder Halbamide von C₄-C₂₀-Dicarbonsäuren; Halbester oder Halbamide von Copolymeren aus ethylenisch ungesättigten C₄-C₂₀-Dicarbonsäureanhydriden und ethylenisch ungesättigten Monomeren vom Typ C₂-C₂₀-Olefine und/oder C₈-C₂₀-Vinylaromaten; und/oder Salze von C₁-C₁₂Alkylaminen bzw. Alkanolaminen mit C₁-C₁₈-aliphatischen, C₇-C₁₄-aromatischen oder alkylaromatischen Carbonsäuren sowie anorganischen Säuren vom Typ Salzsäure, Schwefelsäure oder Phosphorsäure, eingesetzt werden.

26. Verfahren nach mindestens einem der Ansprüche 8 bis 25, **dadurch gekennzeichnet, dass** als thermisch zerfallende Radikalbildner zur Vernetzung der Thermoplastkomponente Radikalbildner, deren thermischer Zerfall unterhalb 210 °C abgeschlossen ist, vom Typ Acoylperoxide, Alkyl-peroxide, Hydroperoxide, Peroxycarbonate und/oder Perester, eingesetzt werden.

27. Verwendung des Kunststofferzeugnisses nach Anspruch 1 bis 7 in Fahrzeugindustrie, Maschinenbau, Elektrotechnik und Elektronik.

## Claims

1. Plastics product of high strength and flexibility,
**characterized in that**
the plastics product is a crosslinked semifinished product or a crosslinked molded material based on interpenetrating networks and comprises from 10 to 50% by weight of at least one crosslinked thermoplastic and from 90 to 50% by weight of at least one crosslinked melamine resin ether, where the crosslinked semifinished product or the crosslinked molded material has been produced from a mixture composed of thermoplastics which comprise, based on the total weight of the thermoplastics, from 0.1 to 2% by weight of a thermally decomposing free-radical generator, and melamine resin ethers which comprise, based on the total weight of the melamine resin ethers, from 0.1 to 2% by weight of a hardener.

2. Plastics product according to claim 1, **characterized in that** at least one thermoplastic is
an ethylene-vinyl acetate copolymer,
a partially hydrolyzed ethylene-vinyl acetate copolymer whose vinyl acetate content is from 5 to 50% by weight,
an ethylene-acrylate copolymer,
an ethylene-methacrylate copolymer whose ethylene content is from 60 to 95 mol%,
a hydroxy-end-group-terminated aliphatic polyester,
a polycaprolactone,
a poly(meth)acrylate whose content of hydroxy-C₁-C₆-alkyl (meth)acrylate in the molecule is from 2 to 10 mol%,
from 5 to 20% by weight of a vinyl acetate or C₁-C₈-alkyl acrylate,
a C₁-C₈-alkyl-methacrylate-grafted polyethylene,
an ethylene-C₃-C₈ olefin copolymer whose ethylene content is from 80 to 95 mol%,
a styrene-butadiene-styrene block copolymer,
a styrene-ethylene-butadiene-styrene block copolymer and/or a thermoplastic polyurethane.

3. Plastics product according to claim 1 or 2, **characterized in that** at least one melamine resin ether has a weight-average molecular weight of from 1500 to 200 000 and a molar melamine/formaldehyde ratio of from 1:1.5 to 1:4.

4. Plastics product according to at least one of the preceding claims, **characterized in that** it comprises, based in each case on the plastics products, from 10 to 70% by weight of fillers, adsorber materials, inorganic fibers, and/or synthetic fibers, from 1 to 15% by weight of hydrophobicizers, from 1 to 10% by weight of flame retardants, from 0.1 to 2% by weight of pigments, from 0.1 to 2% by weight of stabilizers, and/or from 0.1 to 5% by weight of auxiliaries.

5. Plastics product according to claim 4, **characterized in that** the fillers and adsorber materials are Al₂O₃, Al(OH)₃, SiO₂, barium sulfate, calcium carbonate, glass beads, siliceous earth, mica, powdered quartz, powdered slate, hollow microbeads, carbon black, talc, phyllosilicates, molecular sieves, rock flour, chalk, talc, cellulose, and/or cyclodextrines, preferred fillers being phyllosilicates of the type represented by montmorillonite, bentonite, kaolinite, muscovite, hectorite, fluorohectorite, kanemite, revdite, grumantite, ilerite, saponite, beidelite, nontronite, stevensite, laponite, taneolite, vermiculite, halloysite, volkonskoite, magadite, rectorite, kenyaite, sauconite, borofluorophlogopite, and/or synthetic smectites, and preferred adsorber materials being phyllosilicates of the type represented by montmorillonite, bentonite, hectorite, molecular sieves of types A, X, Y, and in particular 5A, silicon-dioxide-based adsorbers, and/or hollow microbeads.

6. Plastics product according to claim 4 or 5, **characterized in that** at least one hydrophobicizer is an organosilicon compound of the type represented by organosilanols, organosiloxanes, organosilanes, organoaminosilanes, amino-end-group- or hydroxy-end-group-terminated polyorganosiloxanes; surface-fluorinated SiO₂ nanoparticles, polytetrafluoroethylene nanoparticles, and/or imide-group-containing copolymers of ethylenically unsaturated C₄-C₂₀ dicarboxylic anhydrides.

7. Plastics product according to at least one of the preceding claims, **characterized in that** the plastics product is an injection molding or is a tube, sheet, or profiles.

8. Process for the production of a plastics product, according to claim 1,
**characterized in that**
the plastics product is produced via shaping and crosslinking of pseudoplastic melts of mixtures of melamine resin ethers and of thermoplastics.

9. Process according to claim 8, **characterized in that** the plastics product is produced by an extruder process in which, in a first stage of the process, in a first extruder segment, melt mixtures composed of melamine resin ethers and of thermoplastics are prepared, then the melt mixture is devolatilized after homogenization,
and then, in the second extruder segment, hardener and thermally decomposing free-radical generator are fed and homogenized in the melt mixture, and
in a second stage of the process, the melt mixture is either discharged from the extruder, and pelletized,
the molding composition pellets being melted in a third stage of the process and the pseudoplastic melt being processed in presses, extruders or injection-molding machines, with crosslinking, to give semifinished products or molded materials, or is heated in a third extruder segment, the pseudoplastic melt being discharged, with crosslinking, through a die, and being drawn off in the form of a semifinished product.

10. Process according to claim 9, **characterized in that** the extruder process has at least one extruder whose length is from 30 to 60 D, equipped with side-feed equipment for solid and liquid substances and vacuum devolatilization.

11. Process according to claim 9 or 10, **characterized in that** the melt mixtures composed of melamine resin ethers and of thermoplastics are prepared at melt temperatures of from 100 to 170°C.

12. Process according to at least one of claims 9 to 11, **characterized in that** the mixture components are fed collectively into the feed hopper, or at least one melamine resin ether is fed into the thermoplastic melt after melting of the thermoplastic by way of side-feed equipment or at least one thermoplastic is fed into the thermoplastic melt after melting of the melamine resin ether by way of side-feed equipment.

13. Process according to at least one of claims 9 to 12, **characterized in that,** in the second extruder segment, melt temperatures of from 100 to 150°C have been set into the melt mixture.

14. Process according to at least one of claims 9 to 13, **characterized in that,** in the second extruder segment, hardener and/or thermally decomposing free-radical generator are used in the form of masterbatch comprising from 60 to 90% by weight of thermoplastics.

15. Process according to at least one of claims 9 to 14, **characterized in that** fillers, adsorber materials, inorganic fibers, synthetic fibers, flame retardants, pigments, stabilizers, and/or auxiliaries are fed into the extruder in the first and/or second extruder segment.

16. Process according to at least one of claims 9 to 15, **characterized in that,** in the third extruder segment, a temperature of from 150 to 240°C has been set.

17. Process according to claim 8, **characterized in that** the plastics product is produced by a sintering process.

18. Process according to claim 17, **characterized in that,** in a first stage of the process, mixtures composed of at least one melamine resin ether and of at least one thermoplastic are sintered in high-speed mixers, the sintered mixture is cooled, and, after cooling, hardener and/or thermally decomposing free-radical generator are applied in a drum mixer to the sinter mixture, and, in a second stage of the process, the sinter mixture is melted, and the pseudoplastic melt is processed in presses, extruders, or injection-molding machines, with crosslinking, to give semifinished products or molded materials.

19. Process according to claim 17 or 18, **characterized in that** fillers, adsober materials, inorganic fibers, and/or synthetic fibers are sintered concomitantly in the first stage of the process.

20. Process according to at least one of claims 17 to 19, **characterized in that** the residence time in the high-speed mixer is from 3 to 30 min and the final temperature is from 90 to 160°C.

21. Process according to at least one of claims 17 to 20, **characterized in that** the temperatures to which cooling of the sinter mixture takes place are from 50 to 120°C.

22. Process according to at least one of claims 17 to 21, **characterized in that,** in the second stage of the process, the sinter mixture is melted at temperatures of from 150 to 240°C.

23. Process according to at least one of claims 17 to 22, **characterized in that,** in the first stage of the process, flame retardants, pigments, stabilizers, and/or auxiliaries are applied in a drum mixer.

24. Process according to at least one of claims 8 to 23, **characterized in that,** at least one melamine resin ether is an etherified melamine resin condensate which is free from hydroxy-methyleneamino groups bonded to the triazine rings of the melamine resin condensate and from -NH-CH₂-O-CH₂-NH- groups linking triazine rings, and in which C₁-C₁₈ alcohols and/or diols with molecular weights of from 62 to 20 000 have been used for the etherification of the hydroxymethyl-amino groups.

25. Process according to at least one of claims 8 to 24, **characterized in that,** as hardener for at least one melamine resin ether, acidifiers of the type represented by blocked sulfonic acids, aliphatic C₄-C₁₈ carboxylic acids; aromatic C₇-C₁₈ carboxylic acids; alkali metal salts or ammonium salts of phosphoric acid; C₁-C₁₂-alkyl esters or C₂-C₈-hydroxyalkyl esters of C₇-C₁₄-aromatic carboxylic acids, or of inorganic acids; salts of melamine or of guanamines with C₁-C₁₈-aliphatic carboxylic acids; anhydrides, half esters or half amides of C₄-C₂₀ dicarboxylic acids; half esters or half amides of copolymers composed of ethylenically unsaturated C₄-C₂₀ dicarboxylic anhydrides and of ethylenically unsaturated monomers of the type represented by C₂-C₂₀ olefins and/or C₈-C₂₀ vinylaromatics; and/or salts of C₁-C₁₂ alkylamines and, respectively, alkanolamines with C₁-C₁₈-aliphatic, C₇-C₁₄-aromatic, or alkylaromatic carboxylic acids, and also with inorganic acids of the type represented by hydrochloric acid, sulfuric acid, or phosphoric acid, are used.

26. Process according to at least one of claims 8 to 25, **characterized in that,** as thermally decomposing free-radical generator for the crosslinking of the thermoplastic component, free-radical generators whose thermal decomposition has been concluded below 210°C are used, of the type represented by acyl peroxides, alkyl peroxides, hydroperoxides, peroxycarbonates, and/or peresters.

27. Use of the plastics product according to any of claims 1 to 7 in the vehicle industry, mechanical engineering, electrical engineering, and electronics.

## Revendications

1. Produit en matériau synthétique de solidité et de souplesse élevées, **caractérisé en ce que** le produit en matériau synthétique est un produit semi-fini réticulé ou une matière à mouler réticulée à base de réseaux interpénétrants, qui contient 10 à 50% en masse d'au moins un thermoplastique réticulé et 90 à 50% en masse d'au moins un éther de résine de mélamine réticulé, et le produit semi-fini réticulé ou la matière à mouler réticulée étant préparé(e) à partir d'un mélange de thermoplastiques, qui contiennent 0,1 à 2% en masse d'un agent de formation de radicaux à décomposition thermique, par rapport à la quantité totale des thermoplastiques, et d'éthers de résine de mélamine qui contiennent 0,1 à 2% en masse d'un durcisseur, par rapport à la quantité totale de l'éther de résine de mélamine.

2. Produit en matériau synthétique selon la revendication 1, **caractérisé en ce qu'**au moins un thermoplastique est
un copolymère d'éthylène-acétate de vinyle,
un copolymère d'éthylène-acétate de vinyle partiellement saponifié, comprenant une teneur en acétate de vinyle de 5 à 50% en masse,
un copolymère d'éthylène-ester de l'acide acrylique,
un copolymère d'éthylène-ester de l'acide méthacrylique présentant une teneur en éthylène de 60 à 95% en mole,
un polyester aliphatique terminé par des groupes hydroxy terminaux,
une polycaprolactone,
un poly(méth)acrylate présentant une teneur en (méth)acrylate d'hydroxy-C₁-C₆-alkyle lié de 2 à 10% en mole,
un polyéthylène greffé avec 5 à 20% en masse d'acétate de vinyle ou d'ester C₁-C₈-alkylique de l'acide acrylique ou d'ester C₁-C₈-alkylique de l'acide méthacrylique,
un copolymère d'éthylène-oléfine en C₃-C₈ présentant une teneur en éthylène de 80 à 95% en mole, un copolymère à blocs de styrène-butadiène-styrène,
un copolymère à blocs de styrène-éthylène-butadiène-styrène et/ou un polyuréthane thermoplastique.

3. Produit en matériau synthétique selon la revendication 1 ou 2, **caractérisé en ce qu'**au moins un éther de résine de mélamine présente une masse molaire pondérale moyenne de 1500 à 200 000 et un rapport molaire mélamine/formaldéhyde de 1:1,5 à 1:4.

4. Produit en matériau synthétique selon au moins l'une quelconque des revendications précédentes, **caractérisé en ce qu'**il contient 10 à 70% en masse de charges, d'adsorbants, de fibres inorganiques et/ou de fibres en matériau synthétique, 1 à 15% en masse d'agent d'hydrofugation, 1 à 10% en masse d'agent ignifuge, 0,1 à 2% en masse de pigments, 0,1 à 2% en masse de stabilisateurs et/ou 0,1 à 5% en masse, à chaque fois par rapport aux produits en matériau synthétique, d'adjuvants.

5. Produit en matériau synthétique selon la revendication 4, **caractérisé en ce que** les charges et adsorbants sont Al₂O₃, Al(OH)₃, SiO₂, sulfate de baryum, carbonate de calcium, billes de verre, terres de diatomées, mica, farine de quartz, farine de schiste, microbilles creuses, suie, talc, silicates à couches, tamis moléculaires, farine de roche, craie, talc, cellulose et/ou cyclodextrines, de préférence, en tant que charges, silicates à couche de type montmorillonite, bentonite, kaolinite, muscovite, hectorite, fluorohectorite, kanémite, revdite, grumantite, ilérite, saponite, beidellite, nontronite, stevensite, laponite, tanéolite, vermiculite, halloysite, volkonskoite, magadite, rectorite, kényaite, sauconite, borofluorophlogopite et/ou smectites synthétiques, et de préférence comme matériaux adsorbants silicates à couches du type montmorillonite, bentonite, hectorite, tamis moléculaires des types A, X, Y, en particulier 5A, adsorbants à base de dioxyde de silicium et/ou microbilles creuses.

6. Produit en matériau synthétique selon la revendication 4 ou 5, **caractérisé en ce qu'**au moins un agent d'hydrofugation est un composé organique du silicium du type organosilanols, organosiloxanes, organosilanes, organoaminosilanes, polyorganosiloxanes terminés par des groupes terminaux amino ou hydroxy, nanoparticules de SiO₂ fluorées en surface, nanoparticules en polytétrafluoroéthylène et/ou copolymères contenant des groupes imide d'anhydrides d'acides C₄-C₂₀-dicarboxyliques éthyléniquement insaturés.

7. Produit en matériau synthétique selon au moins l'une quelconque des revendications précédentes, **caractérisé en ce que** le produit en matériau synthétique est réalisé sous forme de pièce moulée par injection, tube, plaque ou profilé.

8. Procédé pour la réalisation d'un produit en matériau synthétique selon la revendication 1, **caractérisé en ce que** le produit en matériau synthétique est préparé par moulage et réticulation de masses fondues à viscosité de structure de mélanges d'éthers de résine de mélamine et de thermoplastiques.

9. Procédé selon la revendication 8, **caractérisé en ce que** le produit en matériau synthétique est réalisé par un procédé d'extrusion, dans lequel, dans une première étape de procédé, dans un premier segment d'extrudeuse, on prépare des mélanges de masses fondues d'éthers de résine de mélamine et de thermoplastiques, après homogénéisation, on dégaze le mélange de masses fondues ensuite, dans le deuxième segment d'extrudeuse, on dose et on homogénéise dans le mélange de masses fondues des durcisseurs et des agents de formation de radicaux à décomposition thermique et dans une deuxième étape de procédé, soit on évacue le mélange de masses fondues de l'extrudeuse, on granule, on fond le granulat de masse de moulage dans une troisième étape de procédé et la masse fondue à viscosité de structure est transformée dans des presses, des extrudeuses ou des machines de moulage par injection, avec réticulation, en produits semi-finis ou en matières à mouler, soit, dans un troisième segment d'extrudeuse, on chauffe le mélange de masses fondues et la masse fondue à viscosité de structure est évacuée, avec réticulation, par un outil de moulage et éliminée sous forme de produit semi-fini.

10. Procédé selon la revendication 9, **caractérisé en ce que** le procédé d'extrusion présente au moins une extrudeuse d'une longueur de 30 à 60 D, qui est équipée de dispositifs de dosage à flux latéral pour des milieux solides et liquides et d'un dégazage à vide.

11. Procédé selon la revendication 9 ou 10, **caractérisé en ce que** les mélanges de masses fondues d'éthers de résine de mélamine et de thermoplastiques sont préparés à des températures de la masse de 100 à 170°C.

12. Procédé selon au moins l'une quelconque des revendications 9 à 11, **caractérisé en ce que** les composants de mélange sont dosés ensemble dans l'entonnoir d'introduction ou au moins un éther de résine de mélamine est dosé, après la fusion du thermoplastique, via un dispositif de dosage à flux latéral dans la masse fondue de thermoplastique ou au moins un thermoplastique est dosé après la fusion de l'éther de résine de mélamine via un dispositif de dosage à flux latéral dans la masse fondue de thermoplastique.

13. Procédé selon au moins l'une quelconque des revendications 9 à 12, **caractérisé en ce qu'**on règle dans le deuxième segment d'extrudeuse des températures de la masse de 100 à 150°C dans le mélange de masses fondues.

14. Procédé selon au moins l'une quelconque des revendications 9 à 13, **caractérisé en ce que** dans le deuxième segment d'extrudeuse, on utilise des durcisseurs et/ou des agents de formation de radicaux à décomposition thermique sous forme de lot-maître contenant 60 à 90% en masse de thermoplastique.

15. Procédé selon au moins l'une quelconque des revendications 9 à 14, **caractérisé en ce qu'**on dose des charges, des adsorbants, des fibres inorganiques, des fibres en matériau synthétique, des agents ignifuges, des pigments, des stabilisateurs et/ou des adjuvants dans le premier et/ou le deuxième segment d'extrudeuse dans l'extrudeuse.

16. Procédé selon au moins l'une quelconque des revendications 9 à 15, **caractérisé en ce que** dans le troisième segment d'extrudeuse sont réglées des températures de 150 à 240°C.

17. Procédé selon la revendication 8, **caractérisé en ce que** le produit en matériau synthétique est produit selon un procédé de frittage.

18. Procédé selon la revendication 17, **caractérisé en ce que**, dans une première étape de procédé, on fritte des mélanges d'au moins un éther de résine de mélamine et au moins un thermoplastique dans des mélangeurs rapides, on refroidit le mélange fritté et après refroidissement on applique dans un tambour sur le mélange fritté des durcisseurs et/ou des agents de formation de radicaux à décomposition thermique et, dans une deuxième étape de procédé, le mélange fritté est fondu et la masse fondue à viscosité de structure est transformée dans des presses, des extrudeuses ou des machines de moulage par injection, avec réticulation, en produits semi-finis ou en matières à mouler.

19. Procédé selon la revendication 17 ou 18, **caractérisé en ce que** les charges, matériaux absorbants, fibres inorganiques et/ou fibres en matériau synthétique sont frittés conjointement dans la première étape de procédé.

20. Procédé selon au moins l'une quelconque des revendications 17 à 19, **caractérisé en ce que** le temps de séjour dans le mélangeur rapide est compris entre 3 et 30 minutes et la température finale est comprise entre 90 à 160°C.

21. Procédé selon au moins l'une quelconque des revendications 17 à 20, **caractérisé en ce que** le refroidissement du mélange fritté est réalisé à des températures de 50 à 120°C.

22. Procédé selon au moins l'une quelconque des revendications 17 à 21, **caractérisé en ce que** le mélange fritté est fondu dans la deuxième étape de procédé à des températures de 150 à 240°C.

23. Procédé selon au moins l'une quelconque des revendications 17 à 22, **caractérisé en ce que** dans la première étape de procédé on applique dans un tambour des agents ignifuges, des pigments, des stabilisateurs et/ou des adjuvants.

24. Procédé selon au moins l'une quelconque des revendications 8 à 23, **caractérisé en ce qu'**au moins un éther de résine de mélamine est un condensat éthérifié de résine de mélamine, qui est exempt de groupes hydroxyméthylénamine liés aux cycles triazine du condensat de mélamine et de groupes -NH-CH₂-O-CH₂-NH-reliant les cycles triazine et dans lequel l'éthérification des groupes hydroxyméthylamino est réalisée par des alcools en C₁-C₁₈ et/ou des diols présentant des masses molaires de 62 à 20 000.

25. Procédé selon au moins l'une quelconque des revendications 8 à 24, **caractérisé en ce qu'**on utilise comme durcisseur pour au moins un éther de résine de mélamine des agents de formation d'acide du type acides sulfoniques bloqués, acides carboxyliques aliphatiques en C₄-C₁₈ ; acides carboxyliques aromatiques en C₇-C₁₈ ; sels de métal alcalin ou d'ammonium de l'acide phosphorique ; esters C₁-C₁₂-alkyliques ou C₂-C₈-hydroxyalkyliques d'acides carboxyliques aromatiques en C₇-C₁₄ ou d'acides inorganiques ; sels de mélamine ou de guanamines avec des acides carboxyliques aliphatiques en C₁₋₁₈ ; anhydrides, semi-esters ou semi-amides d'acides dicarboxyliques en C₄-C₂₀ ; semi-esters ou semi-amides de copolymères d'anhydrides d'acides dicarboxyliques en C₄-C₂₀ éthyléniquement insaturés et de monomères éthyléniquement insaturés du type oléfines en C₂-C₂₀ et/ou aromatiques de vinyle en C₈-C₂₀ ; et/ou sels de C₁-C₁₂-alkylamines ou d'alcanolamines avec des acides carboxyliques aliphatiques en C₁-C₁₈, aromatiques en C₇-C₁₄ ou alkylaromatiques ainsi qu'avec des acides inorganiques du type acide chlorhydrique, sulfurique ou phosphorique.

26. Procédé selon au moins l'une quelconque des revendications 8 à 25, **caractérisé en ce qu'**on utilise comme agents de formation de radicaux à décomposition thermique pour la réticulation du composant thermoplastique des agents de formation de radicaux dont la décomposition thermique est terminée au-dessous de 210°C, du type acylperoxydes, alkylperoxydes, hydroperoxydes, peroxycarbonates et/ou peresters.

27. Utilisation du produit en matériau synthétique selon la revendication 1 à 7 dans l'industrie automobile, la construction de machines, l'électrotechnique et l'électronique.
